Europäisches Patentamt

European Patent Office

Office européen des brevets

(19)

(11) Publication number: **0 352 911**
**A2**

## (12) EUROPEAN PATENT APPLICATION

(21) Application number: 89306624.1

(22) Date of filing: 29.06.89

(51) Int. Cl.⁴: **C08F 4/02 , C08F 4/62**

(30) Priority: 30.06.88 FI 883128

(43) Date of publication of application:
**31.01.90 Bulletin 90/05**

(84) Designated Contracting States:
**AT BE CH DE ES FR GB GR IT LI LU NL SE**

(71) Applicant: NESTE OY
Keilaniemi
SF-02150 Espoo(FI)

(72) Inventor: Garoff, Thomas
Borgstrominkuja 4 K 104
SF-00840 Helsinki(FI)

(74) Representative: Lamb, John Baxter et al
MARKS & CLERK 57/60 Lincoln's Inn Fields
London WC2A 3LS(GB)

(54) Procedure and means for control/the follow-up of activating reactions for Ziegler-Natta catalyst carriers, and their use.

(57) The invention concerns a procedure for observing the activation reactions of Ziegler-Natta catalyst carriers when preparing Ziegler-Natta catalysts. In the procedure, the development of hydrochloric acid (HCl) is followed by conducting the produced hydrochloric acid (HCl) into a hydrochloric acid absorption vessel (7) in which a medium has been placed, wherein the hydrochloric acid is absorbed, whereby the quantity of the produced hydrochloric acid in the absorption vessel is monitored with by means of the pH value of the solution, a pH sensor, or with the aid of the quantity of base fed into the solution, required for neutralizing the solution, or for achieving a given pH value of said solution. The present invention also concerns a means for implementing the procedure of the invention, said means advantageously comprising a control appratus (11), with the aid of which base is fed automatically into the absorption vessel in such a quantity on the basis of the pH value yielded by the pH sensor immersed into the solution that the pH value of the absorption solution achieves the desired value.

# Procedure and means for control/the follow-up of activating reactions for Ziegler-Natta catalyst carriers, and their use

The present invention concerns a procedure and a means for controlling activation reactions of Ziegler-Natta catalyst carriers when producing Ziegler-Natta catalysts, and their use.

In the Ziegler-Natta catalyst synthesis, one of the most central phases is the activation of the crystal form of the carrier. This may be accomplished either mechanically or chemically. In a mechanical process, the carrier ($MgCl_2$ salt) is simply ground to become broken, whereby the surface of the crystals is broken and activated. In a chemical process, magnesium dichloride salt, which has been coordinated in ethanol, is prepared first. Allowing said coordinated salt to react with a large excess of titanium tetrachloride, the crystal shape is broken and the carrier activated due to the chemical reaction. Into the reactor is first fed coordinated magnesium dichloride $MgCl_2 \cdot 6C_2H_5OH$ in an appropriate medium. Thereafter, a considerable excess of titanium tetrachloride $TiCl_4$ is added. The magnesium/titanium molar ratio is of the order 1 : 50. The titanium tetrachloride reacts chemically with alcohol groups. The titanium tetrachloride is dissolved in the excess of titanium tetrachloride and also in the medium used. Associated with said reaction, the crystal structure of the carrier is broken, being thus equivalent to the breaking in a ball mill grinding. Owing to the activation process, a great number of angular points are produced in the crystals. At said angular points, the free titanium tetrachloride is able to become coordinated and provide catalytically active points.

In the so-called wet line, the catalyst carrier is usually prepared from an acid soluble magnesium salt. Magnesium oxide, magnesium hydroxide, magnesium carbonate and their crystal water forms are well appropriate to serve said purpose. The composition of the carrier is in general $MgCl_2 \cdot O,3H_2O \cdot 5,7C_2H_5OH$ although the composition may vary.

In the chemical activation process, the $TiCl_4$ reacts with an alcohol group releasing hydrochloric acid according to the following reaction equation (1):

$$TiCl_4 + ROH \rightarrow Cl_3Ti\text{-}O\text{-}R + HCl \qquad (1)$$

In the reaction the titanium is bound with the oxygen of the alcohol. The produced compound may react with another alcohol molecule, but because of the large excess of titanium tetrachloride, the reaction (1) is probably the most central reaction. With the provision that alcohol is present in excess, the following reaction (2) is possible:

$$Cl_3Ti\text{-}O\text{-}R + ROH \rightarrow R\text{-}O\text{-}Ti(Cl)_2\text{-}O\text{-}R + HCl \qquad (2)$$

The produced titanium chloride alkoxy compounds are dissolved in a warm medium and in an excess of titanium tetrachloride. This is important in view of the catalyst synthesis because said titanium compounds are inactive catalytically. If there are remnants of said compounds in the catalyst, they increase the ash content of the product, and in addition, they reduce the activity of said catalyst by hiding the active points of the catalyst. For that reason, a great attention is paid to washing the catalyst in the catalyst synthesis.

If the original coordinated salt contains crystal water, the situation is different in view of various reactions compared than if it contains merely coordinated alcohol. The first reaction of water with titanium chloride is similar to that with alcohol:

$$TiCl_4 + H_2O \rightarrow Cl_3Ti\text{-}OH + HCl \qquad (3)$$

Since the oxygen atom, which has become bound with titanium, contains one more -O-H bond, it may react further with another $TiCl_4$ molecule:

$$Cl_3Ti\text{-}OH + TiCl_4 \rightarrow Cl_3Ti\text{-}O\text{-}TiCl_3 + HCl \qquad (4)$$

The reaction (3) is essential if there is $TiCl_4$ present in excess. If the titanium reagent is not present in excess, the following reaction (5) may occur:

$$Cl_3Ti\text{-}OH + H_2O \rightarrow HO\text{-}Ti(Cl)_2\text{-}OH + HCl \qquad (5)$$

The dihydroxide produced herewith may react with a second monohydroxide producing a low soluble compound:

$$HO\text{-}Ti(Cl)_2\text{-}OH + Cl_3Ti\text{-}OH \rightarrow HO\text{-}Ti(Cl)_2\text{-}O\text{-}Ti(Cl)_2\text{-}OH + HCl \qquad (6)$$

The reaction (6) may be continued, whereby an indefinite polymer is obtained having a chemical composition of the form $\text{-(-O-Ti(Cl)}_2\text{-)}_n\text{-}$. The production of a polymer is feasible in particular if the reaction components are present in stoichiometric ratio.

When titanizing carriers obtained in a wet line, the reactions (3) to (6) become essential in addition to the ethanol reactions because said carriers still contain some crystal water.

The catalyst systems are, as is well known, highly critical regarding their activity because of which one has to be very exact in preparing said catalyst systems, and the factors which in the production process thereof exert an influence on their activity need be sufficiently recognised. Therefore, a need has arisen on whether the titanizing reaction acts in the same way when treating crystal water magnesium salts as when treating salts containing only crystal ethanol.

The object of the present invention is to create prerequisites to monitor the above-mentioned reactions (1)-(6). The aim is to clarify at which temperature and at which rate said reactions take place, and whether a reaction takes place in one step, or whether different reaction steps can be clearly separated. In particular, attempts are made to clarify differences between tendencies to reaction of crystal water and crystal alcohol. If the wet line synthesis is later adopted on enlarged scale, the clarification of the above-mentioned factors will be significant.

Examining the reaction equations (1)-(6) it is found that the most appropriate method to observe said reactions is to monitor the development of hydrochloric acid gas because in all said reactions, a stoichiometric quantity of hydrochloric acid is released. According to the reaction equations, 1 mol alcohol should release 1 mol hydrochloric acid and 1 mol water, respectively 2 mol hydrochloric acid. Monitoring a reaction with the aid of other reaction components is cumbersome because it is difficult to treat a reaction solution, and it changes readily when exposed to contact with air. Instead, if the development of hydrochloric acid is followed, the absolute nature of said reaction as well as reaction kinetics at different temperatures can be monitored. An aim of the present study is also to clarify to what extent the development of hydrochloric acid reflects the processes in the reaction vessel.

The procedure of the invention for achieving the above-mentioned aims is mainly characterized in that in the procedure the development of hydrochloric acid (HCl) is observed by conducting the produced hydrochloric acid gas into a hydrochloric acid absorption vessel, into which a medium has been introduced in which the hydrochloric acid is absorbed, whereby the amount of the produced hydrochloric acid present in the absorption solution is monitored.

The means of the invention for implementing a first embodiment of the invention is mainly characterized in that the means comprises a reaction vessel in which takes place the reaction to be observed, from which hydrochloric acid is released, members for controlling temperature in said reaction vessel, a vessel containing gas absorption solution into which hydrochloric acid is conducted through a guide pipe also included in said means, said pipe leading from the reaction vessel into the absorption vessel, into which absorption vessel also a member leads for feeding base into said absorption vessel and into which vessel moreover is placed a pH sensor, on the basis of the pH value emitted whereby the base feeding is carried out.

The means of the invention for implementing a second embodiment of the procedure of the invention is mainly characterized in that the means comprises
a reaction vessel in which is carried out the reaction to be observed from which hydrochloric acid is released,
temperature control members for said reaction vessel,
a vessel containing a gas absorption solution into which the hydrochloric acid is conducted through a guide pipe also included in the means, said pipe leading from said reaction vessel into said absorption vessel, and in which vessel is also located a pH sensor indicating the pH value of the absorption solution.

The means of the invention for implementing a third embodiment of the invention is mainly characterized in that the means comprises
a reaction vessel in which is carried out the reaction to be observed from which hydrochloric acid is released,
temperature control members for said reaction vessel,
a vessel containing gas absorption solution into which hydrochloric acid is conducted through a guide pipe also included in the means and leading from said reaction vessel to said absorption vessel, to which absorption vessel also a member leads for feeding base into said absorption vessel, and wherein is moreover placed an indicator, on the basis of the colour indicated of which said base feeding is performed.

The advantageous embodiments of the invention are provided with the characteristic features of the subclaims.

Since titanium tetrachloride reacts strongly with hydroxyl groups producing hydrochloric acid, the invention may be employed in all such instances in which a reaction of titanium tetrachloride with water, alcohol or carboxyl acid is desired to be observed.

The reaction of carboxyl acid is according to the reaction equation (7):

$$R\text{-}COOH + TiCl_4 \rightarrow Cl_3Ti\text{-}O\text{-}CO\text{-}R + HCl \qquad (7)$$

Hereby, one carboxyl group as well as one hydroxyl group always produce one mol hydrochloric acid. For instance, if the utilisability of a new donor containing said groups is desired to be examined, the first thing to do would always be to test with said apparatus whether the agent reacts chemically with $TiCl_4$.

When carriers, that is, silica, magnesium oxide or aluminium oxide are calcinated, the hydroxyl groups which produce new oxygen bridges, thus releasing water, are combined. The above-mentioned invention can be used for checking the perfection of said calcination process. In an instance in which the calcination process has been performed only partly, the remaining hydroxyl groups react with titanium tetrachloride, and hydrochloric acid releases:

$$-Si-OH + TiCl_4 \rightarrow -So-O-TiCl_3 + HCl \qquad (8)$$
$$=Al-OH + TiCl_4 \rightarrow =Al-O-TiCl_3 + HCl \qquad (9)$$
$$-Mg-OH + TiCl_4 \rightarrow -Mg-O-TiCl_3 + HCl \qquad (10)$$
$$-Zn-OH + TiCl_4 \rightarrow -Zn-O-TiCl_3 + HCl \qquad (11)$$

It is feasible to study using the present procedure also the occurrence of crystal water in said compounds. When studying carriers, such compounds as $Al_2O_3 \cdot H_2O$ and $SiO_2 \cdot H_2O$ may be considered.

With titration method the usability of primary and secondary amines as well as mercaptans and thiols as donors can be studied. The reactions in such instances are of the following types:

$$-SH + TiCl_4 \rightarrow -S-TiCl_3 + HCl \qquad (12)$$
$$-NH_2 + TiCl_4 \rightarrow -TiCl_3 + HCl \qquad (13)$$
$$=NH + TiCl_4 \rightarrow =N-TiCl_3 + HCl \qquad (14)$$

With the hydrochloric acid absorption apparatus, a com prehensive group of compounds can be examined. Especially when introducing new donors, their tendency to react with titanium tetrachloride should first be examined with said titration apparatus. If hydrochloric acid develops, it indicates a chemical reaction between $TiCl_4$ and the donor agent. This in turn inhibits the usual coordination with the carrier and increases precipitation formation of the inactive titanium.

In the so-called wet line, the catalyst carrier is usually prepared from an acid soluble magnesium salt. Magnesium oxide, magnesium hydroxide, magnesium carboxide, and their crystal water containing forms serve well said purpose. The salts are suspended in water, whereafter they are titrated with concentrated hydrochloric acid. Hereby, the solution contains dissolved magnesium chloride. The point of equivalence manifests itself in the form of clarification of the solution. Ethanol is added thereafter. When boiling, the ethanol forms an azeotropic mixture with water, whereby the water is distilled from the reaction vessel. Ethanol is added coninuously into the reaction vessel, and decrease of moisture in the reactor is followed by determining the water content with the Karl-Fischer titrator. Drying is continued until the solution contains less than one mol of water per mol of magnesium. An organic dissolvent is poured into the dried ethanol solution to dissolve the ethanol. Normally, heptane has been used for said purpose. The dissolvent dissolves an excess of the ethanol, whereby the magnesium dichloride is precipitated from the solution. Magnesium is present in maximally coordinated form in said crystals. Since the water molecules are coordinated stronger than ethanol with magnesium, all water present in the reactor enters said magnesium dichloride crystals. The remaining free coordination points are filled with ethanol molecules. In the wet line is thus obtained a mixed salt containing both coordinated water and coordinated ethanol. The composition of the carrier is in general $MgCl_2 \cdot O.3H_2O \cdot 5.7C_2H_2OH$. Said composition varies, being dependent on to what extent the ethanol solution is dried azeotropically.

When the titanium tetrachloride reacts with water or alcohol, hydrochloric acid is produced as a reaction product. Therefore, while observing the development of the hydrochloric acid, the titanation reaction can be observed indirectly, and e.g. the need of temperature and time be clarified when titanizing magnesium dichloride containing crystal water. The results can be compared with those obtained with crystal ethanol. In the so-called wet line synthesis is obtained a magnesium chloride carrier containing 0.3 to 1.0 mol crystal water per mol of magnesium.

The procedure of the invention comprises, briefly speaking, the following:

For preparing Ziegler-Natta catalysts, the carrier magnesium dichloride $(MgCl)_2$ is activated. $MgCl_2$ is first made complex with alcohol. When $TiCl_4$ reacts with alcohol, the $MgCl_2$ crystal structure is activated. Active catalysts are so produced that the $TiCl_4$ is coordinated with the $MgCl_2$ carrier.

The primary reaction in the activation phase is the alkoxidation of $TiCl_4$:

$$TiCl_4 + ROH \rightarrow Cl_3Ti-O-R + HCl$$

As described in the foregoing, various by-reactions exist (see reactions 1-6), though the equation 1 is, nevertheless, the main reaction if $TiCl_4$ is in excess. If water is present in the basic material, the reaction progresses as presented in the following summation equation:

$$2TiCl_4 + H_2O \rightarrow Cl_3Ti-O-TiCl_3 + 2HCl$$

The reaction can be compared with respective reactions with $SiCl_4$, $ZrCl_4$, and occasionally with $ThCl_4$ - (reactions 6-8). The reaction between $TiCl_4$ and ROH is one of the most essential ones when preparing the Ziegler-Natta catalyst because it affects the morphology of the carrier material.

The activation of the $MgCl_2$ occurs when HCl gas is produced, and also when titanium oxide products are eluted off. The monitoring of the rate of the produced HCl gas, that is, how the morphology of the catalyst can be influenced, is performed by absorbing the produced HCl in water, and by titrating the acid with water with the aid of pH sensor or indicator. The produced HCl may also be observed simply by the aid of change of its pH value. Using the titration method it is feasible, maintaining the pH value of the absorption solution close to neutral, to follow the formation of the HCl gas as a function of the NaOH consumption. It is also conceivable to maintain the pH value at a value other than in neutral.

Base feeding can be presented in the form of a result curve as a function of time or temperature.

In the means of the invention, a reaction vessel is connected to an absorption vessel. Both vessels are advantageously provided with a mixer. The procedure is performed so that e.g. 200 ml of silicon oil are added in the reaction vessel.

The means is provided with members for controlling temperature and the HCl pipe, and a control apparatus for feeding the base, and advantageously a plotter.

The invention is presented in detail in the following with the aid of the following figure in which the means of the invention is presented. The invention is not confined to the embodiment presented by the figure.

The reference numerals in the figure refer to the following:

1. Reaction vessel
2. Programmable thermal bath
3.a Guiding heat sensors
3.b Guiding heat sensors
4. Sample addition passage
5. Vertical cooler
6. $N_2$ lock
7. HCl absorption vessel
8. Gas conducting pipe
9. pH sensor
10. NaOH addition
11. Control apparatus
12. Plotter

The apparatus with which the titanation reaction is monitored observed is presented in the figure. The reaction vessel (1) itself in which the carrier is titanated is the same as in the normal Ziegler-Natta catalyst synthesis.

By examining the reaction equations (1)-(6) said reactions are monitored by following the development of hydrochloric acid gas; in all said reactions a stoichiometric quantity of hydrochloric acid is released. As taught by the reaction equations, 1 mol of alcohol is expected to release 1 mol of hydrochloric acid and 1 mol of water respectively 2 mol of hydrochloric acid. Observation of the reaction with the aid of other reaction components is cumbersome because it is difficult to treat the reaction solution, and it changes easily when becoming into contact with the air. Instead, if the development of hydrochloric acid is observed, the perfection of the reaction can be observed as well as reaction kinetics at different temperatures. With the aid of the present procedure it is also possible to clarify to what extent the development of hydrochloric acid reflects the processes in the reaction vessel.

In the embodiment of the figure, the development of hydrochloric acid is observed by conducting the produced gas through the discharge pipe of the vertical cooler (5) and the nitrogen lock (6) into the normal guide pipe (8) of the gas washing bottle. Said guide pipe (8) is provided with a dispersing sinter in order to make the gas flow to be dispersed into a fine bubble flow. The gas guide pipe (8) has been connected to a standard 2-liter boiling flask (7), The flask (7) is provided with two necks. The flask (7) is so positioned that the gas conducting pipe (8) is placed in side position so that the other neck points directly upwards. E.g. 1.5 liter ion exchanged water is added into the flask into which is immersed a pH sensor.

Instead of a pH sensor can be used any pH indicator which changes it colour between pH values 3 and 8. In order to provide as efficient absorption of gas into the aqueous solution as possible, the boiling flask (8) includes furthermore a magnet mixer (13), whereby the releasing gas flow is uniformly dispersed in the entire solution quantity.

For the HCl titration to the neck of the other flask, that is, the one pointing directly upwards, is connected a rubber septum. Through the septum is inserted the beak of the byrette. E.g. a 100 ml byrette may be used. For titration solution, e.g. 6m NaOH solution is used. This is for the reason that the alkaline quantity in the byrette would correspond to the stoichiometric quantity of hydrochloric acid to the maximum.

When hydrochloric acid is produced in the reaction vessel (1), it is discharged through the vertical cooler (5) into the outlet pipe of the nitrogen lock (6). Thereby, the gas flow can initially be observed in the form of bubling in said gas lock. Nitrogen feeding is not necessary during the test. Afterwards when the apparatus has been brought into an inert state, the nitrogen feeding is terminated. Thereafter, it is necessary to feed nitrogen only in the instance when vacuum produced in the system, whereby absorption water starts to rise towards the nitrogen lock from the titration vessel. The situation is corrected therewith immediately by opening the nitrogen tap for a moment.

The hydrochloric acid gas discharges from the nitrogen lock (6) into the water of the titration vessel (8) where it immediately becomes absorbed. The pH drops because of the acid addition, which leads to a change in the colour indicator if the indicator and the pH sensor are used for for a change indicated by the pH sensor, as is shown in the figure.

The situation is returned back to the normal by dropping some base solution into the vessel, whereby the colour change will be the opposite one. The progress of the reaction in the titanation vessel (8) can therefore be observed by titrating the hydrochloric acid of the absorption vessel.

The HCl gas produced in the embodiment of the figure, which is produced when the substance being studied reacts with $TiCl_1$, separates from the reaction vessel, and is absorbed into the water vessel. The pH falls down and the control means connected to the pH sensor gives an instruction to feed NaOH solution until the pH has risen back to its former value which is neutral or, if desired, another value. The NaOH feeding is presented in the form of a result curve as a function of temperature or time.

The more abrupt part of said curve gives information about the reaction rate and about the condition in which the reaction takes place. Alternatively, the perfection of the reaction can be examined at different temperatures by maintaining said temperature throughout the entire test.

The reaction components are added into the reactor as follows. First, 200 to 300 ml of silicon oil are added to the reactor. Thereafter a salt, which is e.g. an $MgCl_2$ salt, in which 1-6 crystal water has been coordinated, or 1-6 crystal ethanol, are added in the form of a uniform flow so mixing with the oil that a uniform suspension is obtained. Regarding the test, this is relatively important. If the salt has become caked, the cakes react slowly and unevenly with the titanium tetrachloride. In that instance, no information is yielded from the titration curve on the reaction rate, rather on the decomposing rate of the salt cakes. The second risk factor lies in the poor solubility of the reaction products. The titanium chloride alkoxy compounds presented in the reactions (1)-(6) are all low soluble. If they are formed on the surface of the cakes, the continuing reaction becomes decelerated as the reagent is inhibited from passing through the reaction products into the cake. The composition of a reaction product may also be changed because, for instance, the reaction (2) may readily be given a free rein at the expense of the reaction (1).

After the addition of the salt, the apparatus is frozen to e.g. -20°C. Thereafter, about 400 ml of $TiCl_4$ are added into the reactor while stirring. The reaction mixture is heated in oil bath.

The monitoringn is performed by examining the titanation reaction and making notes of the time and the temperature of the reaction vessel, and the alkaline consumption e.g. every fifth minute or with the aid of an indicator means. Said note frequency in the manual embodiment has proved to be sufficient in describing the progress of titation.

In the procedure, the carrier material or chemical which is examined is added into silicon oil. A uniform suspension is produced by mixing, and that measure is performed advantageously in a nitrogen atmosphere. The reaction vessel is now closed, and the solution is advantageously cooled. Cool $TiCl_4$ is added. At this stage, no development of gas will yet take place. The temperature is raised thereafter. The development of the HCl gas takes place at about 30 to 40°C and reaches the maximum at about 60°C. The development is not terminated, and the temperature is raised to about 100°C.

The invention is furthermore described with the aid of the following test examples.

Solubility of HCl in $TiCl_4$

The solubility of HCl in $TiCl_4$ was tested by conducting pure HCl gas through 800 ml of $TiCl_4$ for three hours at -20°C. The $TiCl_4$ saturated with 400 ml of HCl was transmitted to the testing apparatus and its temperature was raised. The gas development of $TiCl_4$ was a linear function of temperature.

Zero tests, testing of the apparatus and procedure

A standard test for producing hydrochloric acid was performed by raising the temperature in the reaction vessel after adding the titanium tetrachloride by heating slowly. When the temperature of the reaction mixture raised to 100 to 110°C, said reaction mixture was maintained at said temperature for one hour. It proved that said reaction time and reaction temperature were sufficient.

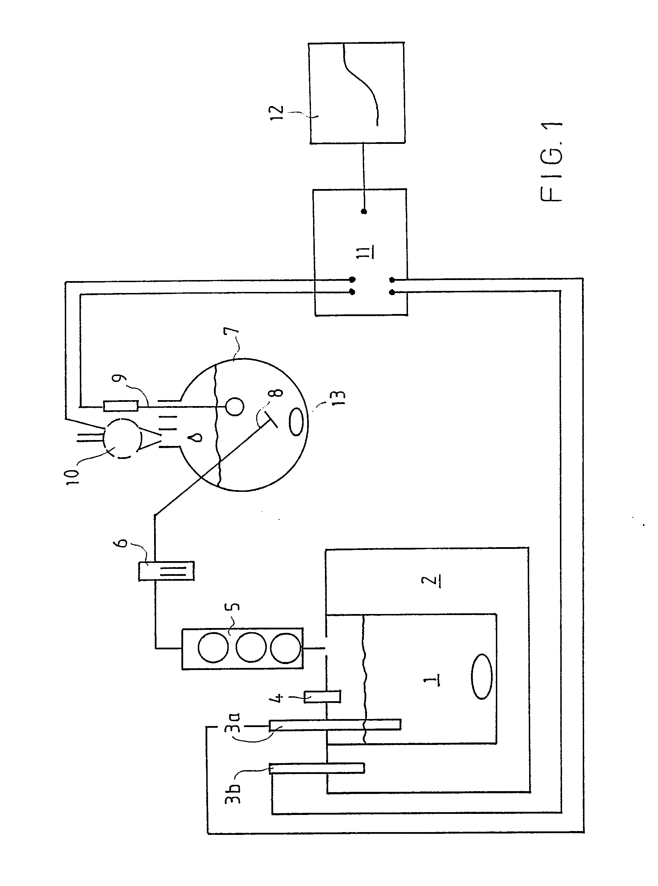

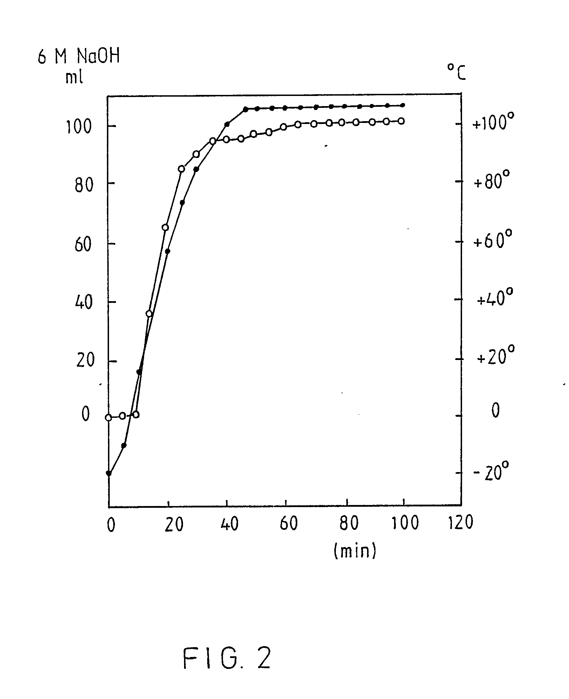

Below, in Fig. 2, is presented a typical gas development curve and a respective temperature curve. A zero test is presently in question in which it was observed how 0.6 mol ethanol reacted with titanium tetrachloride. It is seen in the figure that the reaction reaches completion in 30 minutes after raising the temperature to 100°C. The test also demonstrated that a stoichiometrically expected gas quantity discharged quantitatively from the reaction apparatus and was titratable in a water vessel.

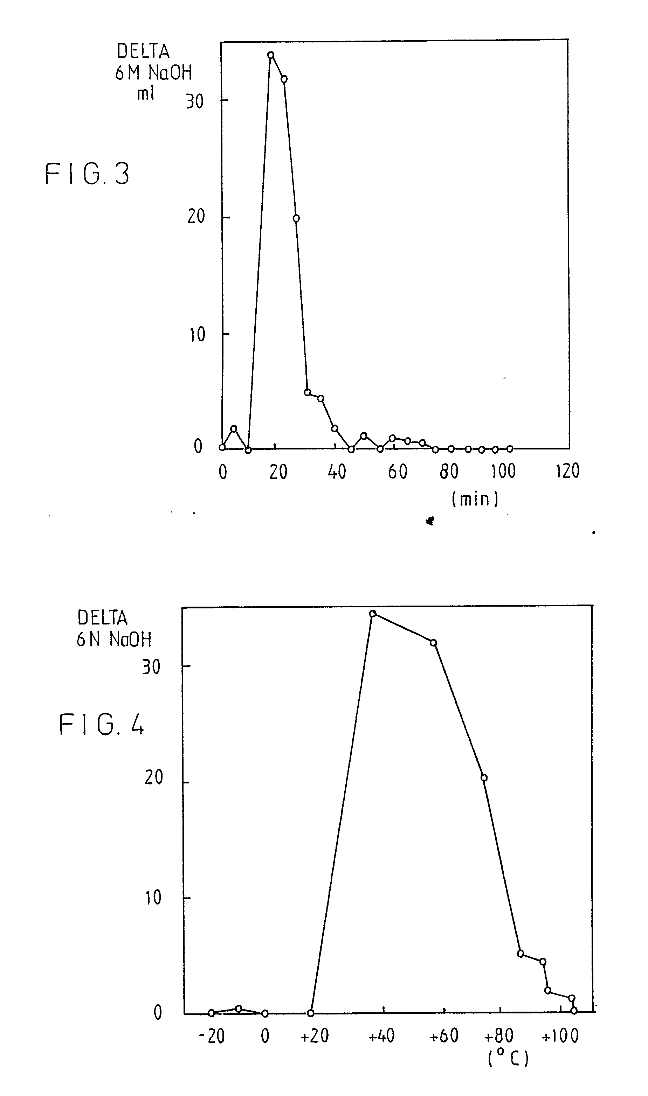

In Fig. 3 is presented the development rate of hydrochloric acid of a respective test as a function of time (derivative from the first curve). The graph showed clearly how complete gas discharging is achieved with said apparatus.

In Fig. 4 is presented the gas development as a function of temperature. It is shown in the figure that gas development is strongest between 30 and 60°C. The detailed results of the individual tests at the end of the description become obvious.

In order to find out whether all alcohols react in the same way as methanol, respective tests were performed for ethanol, propanol and buthanol. In said tests, all said alcohols were added in equal amounts, that is, 0.6 mol. In addition, the same test was performed with water only, that is, 0.6 mol water were added in the reaction vessel.

In order to achieve ascertainty of the fact that titanium tetrachloride in itself does not generate any vapours which may be absorbed in the water vessel, a test was performed in which no reactants were added in the titanium tetrachloride. The reaction vessel was heated in the same way and for an equally long time as in the other tests.

Since esters are added to serve as donors in catalyst syntheses, it was checked for the sake of security whether said esters produce hydrochloric acid with titanium tetrachloride. In the present instance an equal quantity of di-iso-buthyl phtalate was added as in a normal catalyst synthesis, that is, 0.009 mol. All said results are presented in Table 1.

Table 1.

| The test runs with different alcohol solutions and water, and zero testing of the apparatus. | | | | | | | |
|---|---|---|---|---|---|---|---|
| Solution | ml | mol | Time (min) | Temperature (°C) | NaOH (ml) | mol | % |
| $TiCl_4$ | 400 | 3.6 | 80 | 100 | - | - | - |
| Water | 10.8 | 0.6 | 80 | 100 | 183 | 1.10 | 92 |
| Methanol | 24.3 | 0.6 | 50 | 90 | 100 | 0.60 | 100 |
| Ethanol | 35.0 | 0.6 | 200 | 100 | 91 | 0.55 | 92 |
| Propanol | 45.0 | 0.6 | 55 | 80 | 102 | 0.61 | 102 |
| Buthanol | 55.0 | 0.6 | 55 | 80 | 96 | 0.57 | 96 |
| DIBP | 2.5 | 0.009 | 85 | 100 | - | - | - |

The zero test with titanium tetrachloride showed that the reagent in itself does not cause any pH changes in the water vessel. Although the reagent was boiled at 100°C for one hour, the colour indicator means did not change the colour of the solution at all. From the point of view of the teasting arrangements, this was an important result because it was in this way possible to trust in that the titrated hydrochloric acid originated in the reaction and not in the reagents.

The testing experiments indicated that in the reaction 1 mol hydrochloric acid per alcohol mol, and two mol hydro chloric acid per water mol were produced. This was completely as what had been assumed. Different alcohols behaved in the same way. No significance was related to the length of the carbon chain. Instead, if the alcohol has been esterficated with a carboxyl acid, no reactions take place. This was demonstrated with a donor test.

The testing conditions were not the same in all tests. E.h. in ethanol tests a longer cooking time was used. The differences were due to the initial test settings and did not affect the reliability of said tests.

Titanation of carriers containing crystal water and crystal ethanol

As was mentioned before with the so-called wet line catalyst synthesis, a magnesium dichloride carrier is obtained containing 0.1 to 1.0 mol of crystal water per mol of magnesium. The rest of the coordination points are filled with ethanol molecules. In order to find out whether the titanation reaction was similar with the reagent and bound water or alcohol as with freely added water or alcohol, a series of tests were carried out in which a carrier salt was added in the reactor, in which salt water and ethanol in varying proportions had been added.

The carrier salts themselves were prepared by adding first magnesium dichloride containing no crystal water in silicon oil mixing in that a uniform suspension was obtained. Thereafter, the desired stoichiometric quantities of water and ethanol were added in the reaction vessel. If needed, the mixture was heated slightly in order to obtain a completely dissolved salt. The salt was made to react again by adding heptane at room temperature in the reaction vessel. An element analysis was made from the carrier to achieve an ascertainty of that the composition of the salt was correct. After the carrier had been prepared in the desired composition, titanium tetrachloride was added using the standard procedure.

The test results on four salts are shown in Table 2 in which the $MgCl_2$ have been coordinated using various quantities of water and alcohol. The molar ratios of water and alcohol were 0:6, 2:4, 4:2, 6:0. In the table is also presented to what extent the test results deviate from the theoretically estimated quantity of salt.

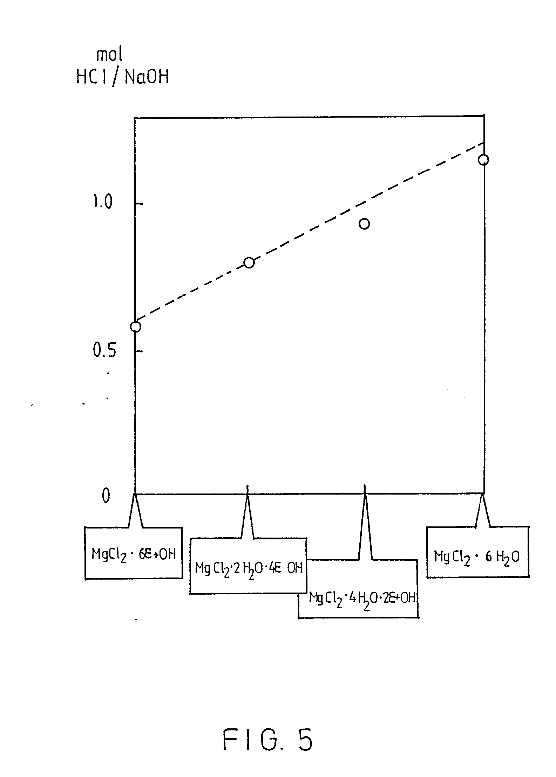

The results are presented graphically in Fig. 5. The test results coincide on the whole with the calculated values. The broken line shows the theoretically calculated quantities of hydrochloric acid for all water-ethanol ratios in the range 0:6 and 6:0. The resulting graph also reinforces the reliability of the reaction equations (1)-(6) in which it is proved that the alcohols release one mol of hydrochloric acid per mol alcohol, respectively water 2 mol hydrochloric acid per mol water. The tests showed that crystal water can be made to depart from salt in the same reaction conditions as crystal ethanol.

Table 2.

| Released HCl gas from $MgCl_2$ carrier, coordinated in water and ethanol. | | | |
|---|---|---|---|
| Salt | Total NaOH (ml) | HCl (mol) | % of theoretical |
| $MgCl_2 \cdot 6EtOH$ | 94.6 | 0.57 | 95 |
| $MgCl_2 \cdot 2H_2OEtOH$ | 135.0 | 0.80 | 100 |
| $MgCl_2 \cdot 4H_2O2EtOH$ | 153.0 | 0.92 | 92 |
| $MgCl_2 \cdot 6H_2O$ | 190.2 | 1.14 | 95 |

Releasing HCl gas from a reaction mixture as a function of temperature

Since it has become clearly obvious in the tests that no hydrochloric acid developed at low temperatures, a series of tests were performed in which identical reaction mixtures were made to react and produce hydrochloric acid at various temperatures. Hereby, it was possible to obtain information concerning the general behaviour related to temperature, such as how quantitative the reaction was at different temperatures.

-20, 0, +20, +40, +60 and +100 degrees Celsius were selected for reaction temperatures. At said temperatures it was possible to cover the entire range in which the development of hydrochloric acid had been observed.

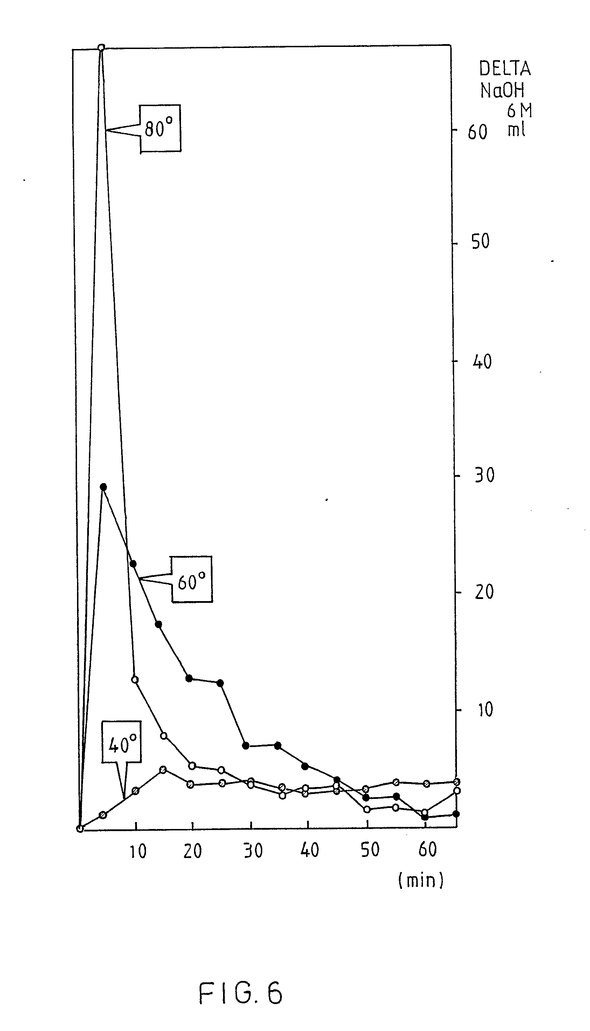

The test was performed by suspending 0.1 mol of $MgCl_2 \cdot 6H_2O$ in silicon oil. The mixture was cooled to -20° C. 400 ml of cold titanium tetrachloride were added in the mixture. Thereafter the temperature of the mixture was raised by efficient heating to the desired point at which the mixture was held thereafter. Hereby, the reaction was allowed to occur nearly completely at said temperature. The test results are presented in Table 3 and graphically in Figs 6,7 and 8.

Table 3.

| Development of hydrochloric acid from MgCl₂*6H₂O salt as a function of temperature. | | | | |
|---|---|---|---|---|
| Temperature (°C) | Total NaOH (ml) | HCl (mol, 60 min) | % of theor. etical | Required time (min, hypothetical) |
| -20 | 0 | 0 | 0 | infinite |
| 0 | 0 | 0 | 0 | infinite |
| +20 | 20.8 | 0.13 | 11 | 600 |
| +40 | 42.0 | 0.25 | 21 | 350 |
| +60 | 126.5 | 0.76 | 63 | 250 |
| +80 | (160) | 0.9-1.0 | 75-85 | 150 |
| +100 | 192.2 | 1.14 | 95 | 60 |

The results show that at -20°C and 0°C no development of hydrochloric acid takes place. At +20°C and +40°C, the development was slow but it continued steady. For achieving a perfect result very long reaction times would have been required. At +60°C, a clear discharge peak was achieved which was controllable with the reaction apparatus employed. If the temperature was suddenly raised to +80°C or +100°C, such a strong discharge peak was obtained that the compactness of the apparatus was not enough. Herewith, some gas managed to escape from between the cover of the reactor, or gas in big bubbles rushed directly through the absorption vessel. The recommended titanation temperature is hereby +60°C during the first half an hour, whereafter the temperature can be raised to +100°C, whereby the reaction can be made quantitative.

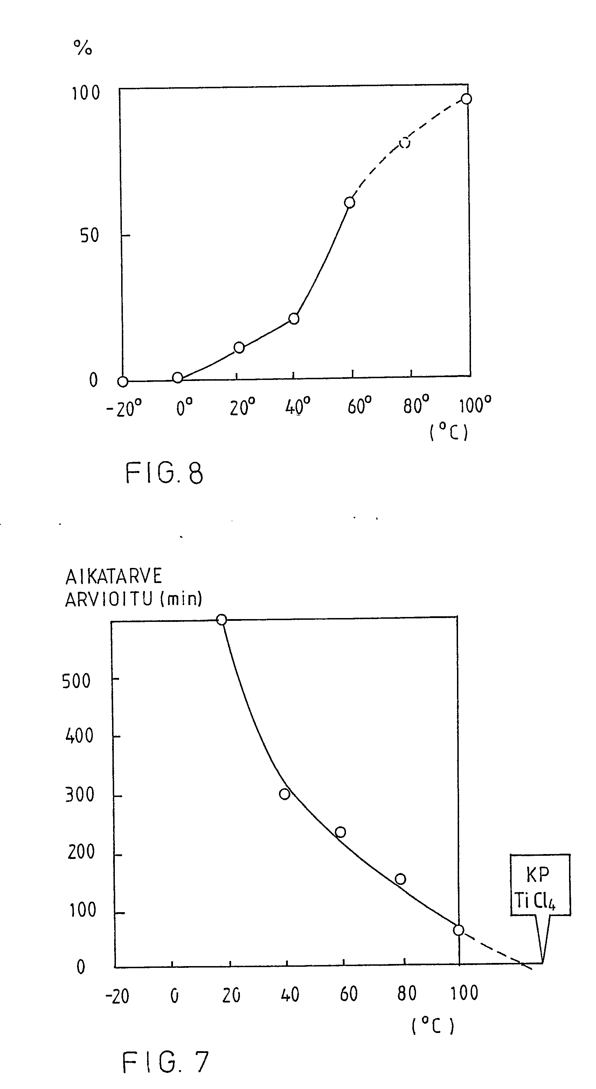

In Fig. 7 is presented a hypothetical required time if lower titanizing temperatures are used, and in Fig. 8 the HCl yield in percentages after titanation of one hour is presented as a function of temperature. It was not until at +100°C at which a quantitative result was obtained.

## Development of hydrochloric acid from magnesium dichloride salts containing crystal ethanol

A similar test series as with carriers containing crystal water was also performed with magnesium dichloride containing crystal ethanol. The temperatures used in the reaction tests were the same, that is -20°C to +100°C. The detailed instructions become obvious in the enclosures on how the MgCl₂ containing crystal alcohol was pre pared, and the detailed test results. On Table 4 are gathered the results of said test series.

Table 4.

| Development of hydrochloric acid from magnesium dichloride containing crystal ethanol as a function of temperature. | | | |
|---|---|---|---|
| Temperature (°C) | Total NaOH (ml) | HCl (mol) | % of the theoretical |
| -20 | 0 | 0 | 0 |
| 0 | 0 | 0 | 0 |
| +20 | 1.2 | 0.01 | 2 |
| +40 | 7.5 | 0.05 | 15 |
| +60 | 32.0 | 0.19 | 64 |
| +80 | 38.0 | 0.23 | 76 |
| +100 | 47.3 | 0.28 | 95 |

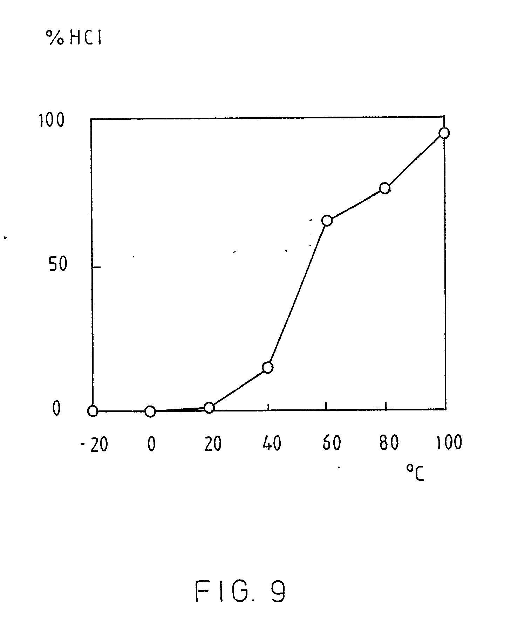

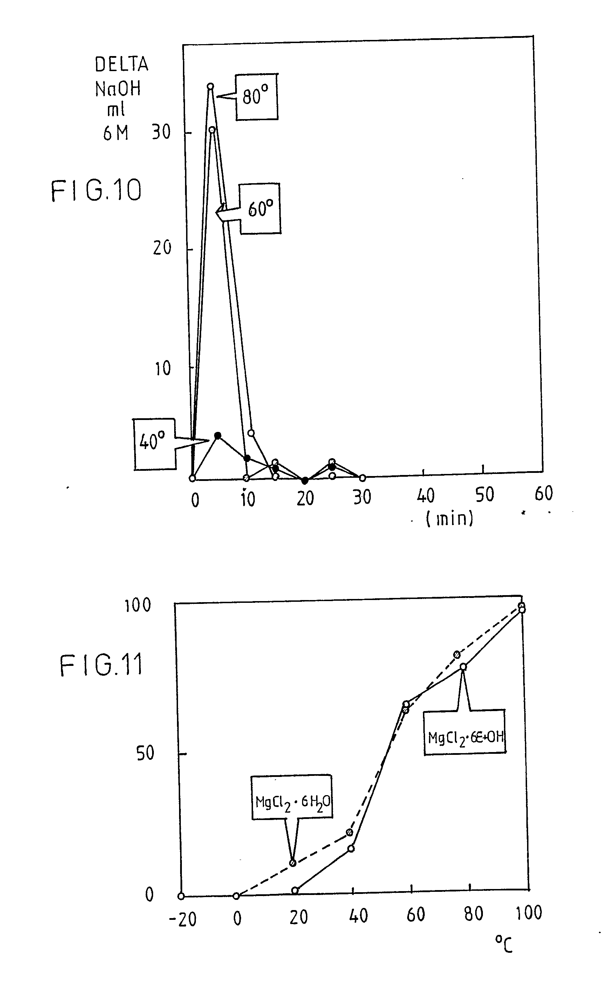

In Figs 9 and 10, the test results are presented graphically.

9

In Fig. 10 it is shown that between -20°C and 0°C no development of hydrochloric acid takes place. At +20°C and +40°C, some gas development was observed, but far from the quantitative reaction. After the temperature had been raised to +60°C, hydrochloric acid was discharged as a peak. When a higher temperature was used, the sharpness of the peak increased. In Fig. 11 comparisons of the result curves between the crystal water and crystal ethanol are made. The figure shows that no significant differences could be observed in the reaction kinetics; consequently, the same reaction conditions can be used for both types of salt.

Summary

With the absorption and titration apparatus for hydrochloric acid which is described in the figure the reaction of titanium tetrachloride and alcohol can be followed. The zero tests showed that $TiCl_4$ in itself causes no formation of hydrochloric acid in an absorption solution. All previous alcohols starting from methanol to buthanol yielded 95 to 100% of hydrochloric acid of the theoretically calculated quantity. The test results coincided with the earlier data on stoichiometry: 1 mol of alcohol yields in a reaction with titanium tetrachloride one mol hydrochloric acid, one mol water yielding two mols of the same.

Both crystal water and the waters and alcohols bound in the form of crystal alcohol behaved in the same way as the freely added water and alcohol. Therefore, equal reaction conditions can be used for each coordination factors.

Raising the temperature to +100°C, a strong quantitative reaction is obtained. Hereby, it is to be noted, however, that a strong gas discharge peak is obtained. The pressure peak sets additional requirements for the apparatus. If the gas development in the reaction is monitored, the result may become too small if, for instance, gas is allowed to escape between the cover and the reactor. Implemented on a larger scale, the pressure peaks may cause dangerous situations. The best combination is to allow the reaction to take place first at +60°C, whereby majority of the gas is made to discharge in a controlled manner, whereafter the temperature is raised to +100°C for producing a quantitative reaction. A half an hour reaction time at both temperatures is sufficient.

Study of the OH groups present on the surface of silicon dioxide

Various procedures exist in determining absorbed $H_2O$ and OH groups on the surface of silicon dioxide, such are for instance alkylation nitride reactions, Karl-Fischer titration, IR-spectroscopy and formation of CHI. The results produced using different methods are not intercomparable.

Silicon dioxide contains absorbed $H_2O$ and OH groups.

If silicon dioxide is used for carrier material when preparing Ziegler-Natta catalysts, humidity and hydroxide groups in the silicon react with $TiCl_4$. The extent to which this occurs can be examined using the procedure and the means of the invention.

Silica carrier material was treated with $TiCl_4$ in the same way as MgCl x 6 $H_2O$. Carrier material quantities of 10 g were used. On the basis of the titration results, the number of OH groups per gram was calculated. The same agents were studied also with TGA. Based on the weight loss, the $H_2O/OH$ quantity was calculated. All the results are shown on Table 5.

10

Table 5.

| The TGA results were compared with the result obtained by HCl/NaOH titration. | | | | | |
|---|---|---|---|---|---|
| | Lost -OH/$H_2O$ 200°C | Lost -OH/$H_2O$ 400°C | Lost -OH/$H_2O$ 600°C | Lost -OH/$H_2O$ 800°C | Neutralized HZI from $TiCl_4$ |
| $MgO \cdot SiO_2 \cdot nH_2O$ (1) | 2.4 | - | - | 6.3 | 1.7 |
| $MgO \cdot SiO_2 \cdot nH_2O$ (2) | 1.8 | - | - | 4.3 | 7.1 |
| $TiO_2 \cdot SiO_2 \cdot nH_2O$ (2) | 1.9 | - | - | 4.3 | 5.3 |
| $TiO_2 \cdot SiO_2 \cdot H_2O$ (3) | 2.2 | 3.8 | 5.5 | 7.2 | 1.7 |
| $2MgO \cdot 3SiOH_2 \cdot nH_2O$ | 15.2 | 20.6 | 24.8 | 26.7 | 18.0 |
| $SiO_2 \cdot nH_2O$ | 2.0 | 4.4 | 7.5 | 9.3 | 0.3 |

Conclusions

When preparing the Ziegler-Natta catalyst by activating the carrier material with an excess of $TiCl_4$, the reaction kinetics can be observed by titrating the developed HCL gas. Some reactions, that is, kinetic studies can be performed by changing stepwise the reaction temperature. If only the quantitative results are of interest, then the best reaction temperatures are 0.5 h at 00°C, and thereafter to the end of the reaction 0.5 h at 100°C. Examination of the degree of calcination as well as the number of hydroxide groups in the carrier material is feasible with the present procedure.

**Claims**

1. Procedure for observing the activation reactions of Ziegler-Natta catalyst carriers in producing Ziegler-Natta catalysts, characterized in that in the procedure the development of hydrochloric acid (HCl) is followed by conducting hydrochloric acid gas (HCl) into a hydrochloric acid absorption vessel, wherein has been placed a medium in which the hydrochloric acid is absorbed, whereby the quantity of the produced hydrochloric acid in said absorption solution is observed.

2. Procedure according to claim 1, characterized in that the quantity of hydrochloric acid in the absorption solution is observed by means of the pH value of said solution, whereby a given pH value corresponds to a given hydrochloric acid concentration.

3. Procedure according to claim 2, characterized in that observation of the pH value is performed with a pH sensor immersed in said solution.

4. Procedure according to claim 1, characterized in that the quantity of hydrochloric acid in the absorption acid is observed by means of the pH value of the absorption solution with the aid of the quantity of base required for achieving a given pH value of the solution.

5. Procedure according to claim 4, characterized in that the base is potassium hydroxide (KOH) or sodium hydroxide (NaOH), advantageously sodium hydroxide (NaOH).

6. Procedure according to claim 4 or 5, characterized in that the feed of the base is performed automatically with the aid of a pH sensor immersed in the solution, on the basis of the pH value yielded whereby the feeding means gives an instruction to feed base into the solution when its pH value drops as long as the pH has risen back to the same or the desired value.

7. Procedure according to claim 4 or 5, characterized in that the feeding of the base is performed with the aid of a colour indicator dissolved into said solution.

8. Procedure according to any one of claims 1 to 7, characterized in that the absorption medium is water.

9. Procedure according to any one of claims 1, 4-6 or 8, characterized in that the feeding of the base is presented in the form of a result curve as a function of time or temperature.

10. A means for implementing the procedure according to any of claims 1, 4-6 or 8, characterized in that the means comprises:

(a) a reaction vessel (1) in which the reaction to be observed from which hydrochloric acid is

11

EP 0 352 911 A2

released is performed,

(b) temperature control members (3a, 3b) for the reaction vessel,

(c) a vessel (7) containing gas absorption solution into which the hydrochloric acid is conducted through a guide pipe (8) also included in the means and leading from the reaction vessel to the absorption vessel, to which absorption vessel also members (10) for feeding the base are conducted and in which vessel is moreover located a pH sensor (9), on the basis of the pH value yielded whereby the feeding of the base is performed.

11. Means according to claim 10, characterized in that the means furthermore comprises a control apparatus (11) with the aid of which base is fed automactically to the absorption vessel on the basis of the pH value yielded by the pH sensor such a quantity that the pH value of the absorption solution remains at the desired value.

12. Means according to claim 10 or 11, characterized in that the means furthermore comprises an indicator (12), advantageously plotter, with which the feeding of the base is presented as a function of time or temperature.

13. Means for implementing the procedure according to claim 2 or 3, characterized in that the means comprises

(a) a reaction vessel (1) in which the reaction to be absorbed from which hydrochloric acid is released is performed,

(b) temperature control members (3a, 3b) for the reaction vessel,

(c) a vessel (7) containing gas absorption solution, into which the hydrochloric acid is conducted through a guide pipe (8) also included in the means and conducting from the reaction vessel to the absorption vessel, and in which vessel is moreover located a pH sensor (9) indicating the pH value of the absorption solution, whereby a given pH value corresponds to a given HCl quantity.

14. Means according to claim 13, characterized in that the means comprises a member (12) for recording the pH values.

15. Means for implementing the procedure according to claim 7, characterized in that the means comprises

(a) a reaction vessel (1) in which the reaction from which hydrochloric acid is released is performed,

(b) temperature control members (3a, 3b) for the reaction vessel,

(c) a vessel (7) containing gas absorption solution into which the hydrochloric acid gas is conducted through a guide pipe (8) also included in the means and conducting from the reaction vessel to the absorption vessel, into which absorption vessel also leads a member (10) for feeding the base into said absorption vessel and in which vessel is moreover placed an indicator, on the basis of the colour indicated whereby the base feeding is performed.

16. Means according to any one of claims 10-15, characterized in that the means comprises furthermore a cooler (5) connected to the guide pipe, advantageously a vertical cooler, and a nitrogen lock (6), wherethrough the hydrochloric acid gas passes in the guide pipe, and a disperser member, advantageously disperser sinter, with the aid of which the gas flow is made to be divided into a fine bubble flow.

17. Means according to any one of claims 10-16, characterized in that the absorption vessel is a boiling flask provided with two necks, which is so placed that the gas conducting pipe is placed in lateral position while the other neck shows directly upwards.

18. Means according to any one of claims 10-17, characterized in that the reaction vessel is surrounded by a programmable thermal bath (2), and that to the thermal bath of the reaction vessel are connected the controlling heat sensors.

19. The use of the procedure according to any one of claims 1-9 or of the means according to claims 10-18 for observing the activation reaction f the Ziegler-Natta catalyst carriers and its by-reactions.

20. Use according to claim 19, characterized in that the reactions to be observed are as follows:

$TiCl_4 + ROH \rightarrow Cl_3Ti\text{-}O\text{-}R + HCl$ (1)

$Cl_3Ti\text{-}O\text{-}R + ROH \rightarrow R\text{-}O\text{-}Ti(Cl)_2\text{-}O\text{-}R + HCl$ (2)

$TiCl_4 + H_2O \rightarrow Cl_3Ti\text{-}OH + HCl$ (3)

$Cl_3Ti\text{-}OH + TiCl_1 \rightarrow Cl_3Ti\text{-}O\text{-}TiCl_3 + HCl$ (4)

$Cl_3Ti\text{-}OH + H_2O \rightarrow HO\text{-}Ti(Cl)_2\text{-}OH + HCl$ (5)

$HO\text{-}Ti(Cl)_2\text{-}OH + Cl_3Ti\text{-}OH \rightarrow HO\text{-}Ti(Cl)_2\text{-}Ti(Cl)_2\text{-}OH + HCl$ (6)

21. The use of the procedure according to any one of claims 1-9 or of the means according to any one of claims 10-18 for observing the reaction in which titanium tetrachloride $TiCl_4$ reacts with the hydroxyl group of water, alcohol or carboxyl acid.

22. The use of the procedure according to any one of claims 1-9 or of the means according to any one of claims 10-18 for observing the reaction in which the titanium tetrachloride reacts with primary and

12

secundary amines, merkaptains and thiols, whereby the usefulness of said compounds as donors is studied.

FIG. 1

EP 0 352 911 A2

FIG. 2

FIG.3

FIG.4

FIG. 5

FIG. 6

FIG. 8

FIG. 7

% HCI

FIG. 9

FIG.10

FIG.11